Europäisches Patentamt

European Patent Office

Office européen des brevets

(19)

(11) Publication number: **0 232 566**
A1

(12) # EUROPEAN PATENT APPLICATION

(21) Application number: **86202367.8**

(22) Date of filing: **23.12.86**

(51) Int. Cl.⁴: **G 01 N 27/22**

(30) Priority: **23.12.85 NL 8503554**

(43) Date of publication of application: **19.08.87**
**Bulletin 87/34**

(84) Designated Contracting States: **AT BE CH DE ES FR GB GR IT LI LU NL SE**

(71) Applicant: **STICHTING TECHNISCHE EN FYSISCHE DIENST VOOR DE LANDBOUW, Mansholtlaan 12, Wageningen (NL)**

(72) Inventor: **Hilhorst, Maximus Andreas, Grietjeshof 29, NL-6721 VG Bennekom (NL)**

(74) Representative: **van der Beek, George Frans et al, Nederlandsch Octrooibureau Johan de Wittlaan 15 P.O. Box 29720, NL-2502 LS 's-Gravenhage (NL)**

(54) **Device for measuring moisture tension of a substrate.**

(57)  Device for measuring the moisture tension of a substrate, comprising a capacitive sensor which is introduced into the substrate. The dielectric of the capacitive sensor consists of material which differs from the substrate material and which has dielectric properties as a function of the moisture tension which are known so that the moisture tension can be determined from the moisture content measured.

EP 0 232 566 A1

Device for measuring the moisture tension of a substrate.

The present invention relates to a device for measuring the moisture tension of a substrate, comprising a capacitive sensor to be introduced into the substrate.

Such a device is known from the publication entitled "Evaluating soil water" by S.A. Taylor, D.D. Evans and W.D. Kemper of Utac university, 1961. From this publication it emerges that, although it is possible to determine the moisture tension of the soil from the moisture content, this is not to be recommended. The reason is that nonreproducible readings are produced as a result of the dielectric properties of the soil as a function of the moisture tension being unknown. In addition, small colloidal particles present difficulties in relation to the region of measurement. The risk of interferences also appears to be greater for direct measurement of the capacity in the substrate, as a result of which the frequency with which the capacitance is determined is of importance.

In the prior art for measuring the moisture tension use is therefore made of a direct pressure measuring device, i.e. the partial pressure is measured directly by introducing, into the substrate to be measured, a ceramic hollow tube which is connected by a hose to a low-pressure gauge. This is completely filled with deaerated water. A disadvantage of said method is that the measurement region is limited. In addition, leaks in the system may be the cause of small bubbles which result in incorrect measurement. To achieve statistical accuracy, preference is given to measuring with a large tube but, as a result of the greater water displacement, a slower system is produced. In addition, said tubes prove difficult to handle because they are particularly prone to break. Said manner of measurement is very labour-intensive because, apart from deaeration, calibration has to be carried out and it is possible for the water to freeze in the event of frost. In addition, hysteresis has been observed.

0232566

It is the object of the present invention to avoid said disadvantages of the direct method and to provide a device with which the moisture tension of the substrate can be determined from capacitance measurements. The development of such a device has become particularly attractive after the publication of the electrical circuit as described in the Dutch Patent Specification 173,099.

Said object is achieved in the device described above in that the dielectric of the capacitive sensor comprises a material in granular form which is different from the substrate and which has dielectric properties as a function of the moisture tension which are essentially known.

The use of a medium which is different from the material of the substrate, which medium has dielectric properties as a function of the moisture tension which are essentially known, such as a calibration medium, makes it possible to determine the moisture tension from the moisture content in a simple manner. The cumbersome direct measurement of the partial pressure is therefore no longer necessary. The use of granular material makes it possible to adjust the sensitivity and the measurement range of the capacitor to a high or a low moisture tension range in the substrate through the choice of the grain size and grain size distribution. It is possible to determine said grain size (distribution) in a simple manner by sieving. As a result of the use of such a granular material, a reproducible result is obtained when filling a capacitive sensor without further complicated steps being necessary for that purpose. In addition, a good pore distribution is automatically produced under these circumstances and the water resistance remains a minimum. It is also possible to flush in a simple manner. As a result of placing the electrodes in an known substrate, when the capacitive sensor is introduced into a substrate to be measured, the moisture tension of both substrates become equal. The water content, however, remains different. By measuring the capacitance of the electrode system it is possible to determine the moisture tension of the substrate to be measured making use of the fact that the dielectric properties of the known substrate as a function of the moisture tension are known.

It is pointed out that making use of a dielectric with known pore size and porosity for measuring the moisture content of the soil is known from the Dutch Patent Application 6,814,387. At the same time, however, no indication or suggestion is made anywhere of the derivation of the moisture tension from the moisture content or of the use of a dielectric in the granular state. The use of glass fibres as a dielectric for measuring the humidity when used in hygrometers for measuring air humidity and the like is known from the Dutch Patent Specification 79,845. Apart from the fact that the requirements imposed on the measurement of the humidity in the air are quite different from those in a substrate, the use of granular material is not evident from said patent publication. Finally, the use of granules in a device for the measurement of the humidity of a gas is known from US-A-3,315,518 but said grains are, however, coated with a layer of stable, non-ionizing hygroscopic liquid with a low vapour pressure such as polyethylene glycol. In contrast to the present application, said grains are not moisture-absorbent and are only used as a means for increasing surface area. The polyethylene glycol is in this case the absorbent substance.

According to an advantageous embodiment of the invention, the granules are present in globular form. A material which is particularly suitable for use as a dielectric is glass. According to a preferred embodiment, the average grain size may be less than 100 μm and preferably 60 μm.

In order to prevent blockage by soil material openings in the form of oblong slots can be provided in the porous electrode.

The device described above can be coupled in an advantageous manner to a measuring circuit for determining the moisture content. Said measuring circuit comprises an LC oscillator, the sensor being connected in parallel with the parallel LC circuit which determines the oscillation frequency, and which LC circuit cooperates with a voltage-dependent element, the resistance of which is affected by the AC voltage appearing across the circuit in a manner such that a decrease in the loss resistance between the electrodes of the sensor is compensated for by an increase in the resistance of the element and vice versa, the element consisting of a Zener diode in series with a diode.

According to a further embodiment, said measuring circuit can alternatively comprise an LC oscillator, the sensor being connected in parallel with the parallel LC circuit which determines the oscillation frequency, and which LC circuit cooperates with a voltage-dependent element, the resistance of which is affected by the AC voltage appearing across the circuit in a manner such that a decrease in the loss resistance between the electrodes of the sensor is compensated for by an increase in the resistance of the element and vice versa, said element consisting of a field-effect transistor whose source-drain resistance channel is incorporated in the tuned circuit and whose semiconductor substrate and gate respectively are connected to reference voltages.

Because the medium consists of relatively large grains with defined dimensions, it is possible to measure in a frequency range between 1 and 5 MHz. It is thus possible to realize the circuit described above with relatively cheap electronic components.

The invention will now be described in more detail on the basis of an exemplary embodiment using the accompanying drawings. In these:

Figure 1 is a cross-sectional view of a mechanical moisture tension gauge which is usual in the prior art,

Figure 2 is a measuring device according to the present invention,

Figure 3 is another embodiment of the measuring device with electronics incorporated in it,

Figure 4 is a diagram of a measuring circuit in a first embodiment to be coupled to the measuring device according to the invention,

Figure 5 is a diagram of a first compensation circuit to be used in the circuit in Figure 3,

Figure 6 is a diagram of a second compensation circuit to be used in the circuit in Figure 3,

Figures 7 and 8 are the diagram of a second measuring circuit to be used in the device according to the invention.

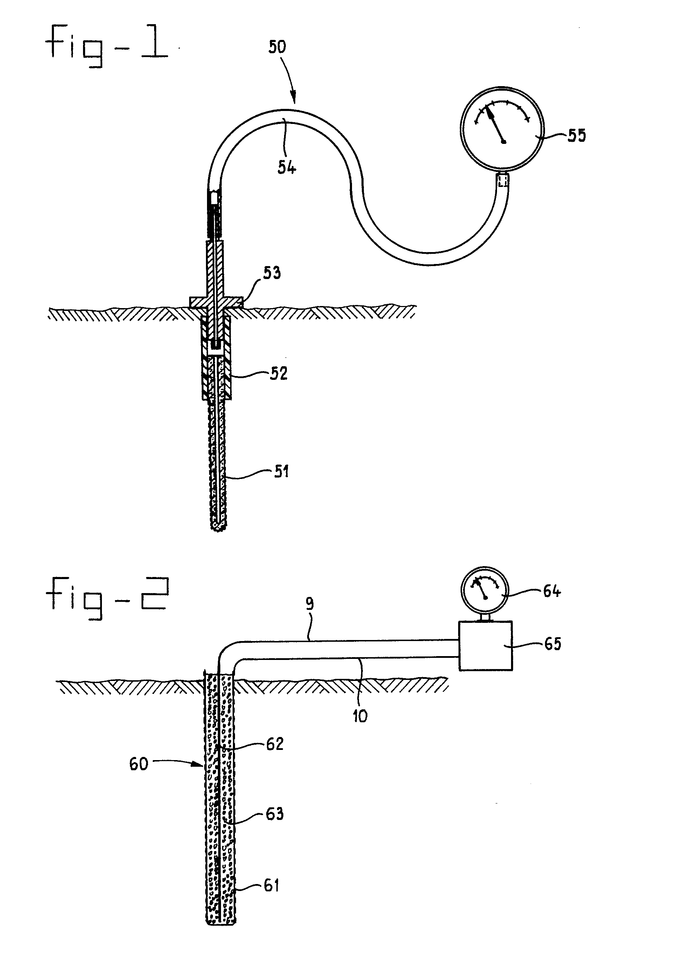

In Figure 1 a moisture tension gauge according to the prior art is shown in its entirety by 50.

It consists of a tube 51 of porous material connected via a flexibleconduit52 to a flange piece 53 which is connected in turn via hose 54 to gauge 55. This device is used to measure the partial pressure of the water in the soil, the so-called moisture tension, directly. Said moisture tension should be differentiated from the moisture content. The moisture content is the quantity of water present per unit mass or unit volume of substrate. The moisture tension is the energy of the water in the substrate. Said moisture tension is expressed in pF, being the logarithm of the water tension. Said water tension can be expressed in mm of water column, bar, pascal etc. When the device in Figure 1 is used, the whole device must be filled with water and purged of all the air present in it after the tube 51 is introduced into the soil. Said air would lead to incorrect reading of the gauge. It is clear that this is very complicated, while the various connections make said device particularly vulnerable. Because tube 51 is normally of porous ceramic material, there is a risk that it will break during handling.

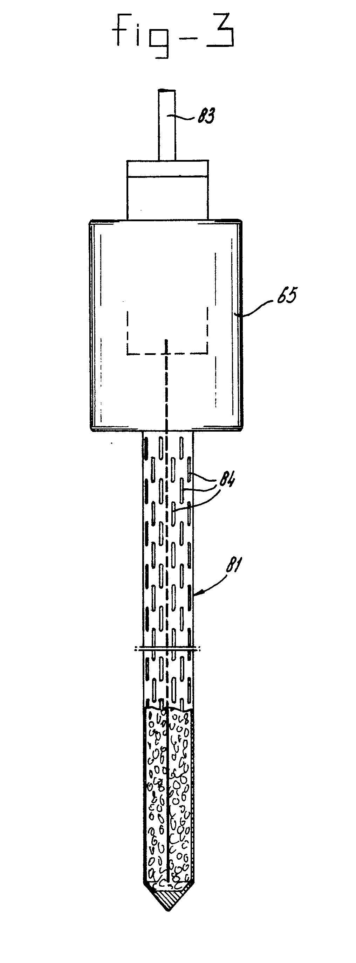

Figure 2 shows the device according to the present invention, comprising a cylindrical capacitor 60 consisting of porous metal sheath 61 within which a core 62 is disposed. Between the porous sheath 61 and the core 62 there are small glass granules. The output leads 9 and 10 of said capacitor are connected to one of the circuits which are shown in the subsequent figures. A reading device may be connected to said circuit. When the cylindrical capacitor 60 is introduced into the soil, the moisture which is in the soil will pass through the pores of the porous sheath 61 and come between the glass granules 63. As a result the measured capacitance, which is a measure of the moisture tension, changes.

The use of glass granules, which may have a dimension of less than 100 μm and preferably 60 μm, ensures a very good water resistance. In addition, said glass granules can be manufactured in a manner such that they have a defined dimension, as a result of which they can be used as a calibration medium. At the same time no disadvantageous effect is produced by the Maxwell-Wagner effect. The dielectric behaviour appears, in addition, to be advantageous for performing moisture tension measurements. For the present invention the frequency used for measurement was between 1 and 5 MHz. The inside wall of the capacitor, such as is already known per se in conductivity meters, may be platinum-plated in order to prevent polarization.

Figure 3 shows a further embodiment of the device according to the present invention. This relates to a combined embodiment in which the measuring sensor 81 is coupled to the electronics 65 so that only a measuring cable 83 is necessary for registering the data. In the embodiment shown the measuring sensor 81 is disposed in line with the electronics 65. This is advantageous when introducing into the soil from above, the housing of the electronics 65 preferably being round so that it can readily be introduced into an opening. It is also possible to dispose measuring sensor 81 perpendicular to the electronics, i.e. horizontally in Figure 3. Said embodiment is advantageous if a groove is made in the soil and the moisture content is measured laterally in order to prevent incorrect measurements due to the water flowing past the measuring sensor 81. As shown in Figure 3, the porous sheath 81 embodies slots 84, extending in the longitudinal direction, which are disposed in a staggered pattern. The advantage of using slots instead of round openings is that the loose granules which may be present in the soil cannot completely cover the opening so that the adverse effect on the measurement result is as small as possible. In addition, the leading end of the sensor 81 is of pointed construction in order to facilitate the introduction.

Figure 4 illustrates the circuit indicated by 65 in Figures 2 and 3 in more detail.

The embodiment shown in Figure 4 consists essentially of a transistor oscillator embodying the transistor T1, the emitter of which is earthed via the self-inductance L1 and the resistor R1; via the self-inductance L2, which has the adjustable capacitance C1 in parallel with it, the collector is connected to the positive terminal 1 of a power supply (not shown in further detail), the other terminal of which is earthed; said power supply is decoupled via the capacitor C2. The base is connected to the junction 2 of a series circuit consisting of the adjustable resistor R2, the fixed resistor R3 and the temperature-compensation diode D1: said junction 2 is earthed for high-frequency voltages via the capacitor C3. As indicated diagrammatically by the broken line 3, the windings L1 and L2 are coupled to each other; the whole forms an oscillator, known per se, having an oscillation frequency of approximately 20 MHz. The output signal of said oscillator is taken off via the winding L3 coupled to the winding L1 and fed via the resistor R4 to the base of the buffer transistor T2. The collector thereof is connected via the resistor R5 to a positive terminal 1 of the power supply B.

A lead from the measuring device is connected via the coupling capacitor C4 to the junction of the capacitor C1, the self-inductance L2 and the collector of the transistor T1. The capacitance of the sensor 60 is therefore also involved in determining the oscillation frequency of the oscillator formed around the transistor T1. The other output 10 is earthed.

As shown diagrammatically in Figure 4, the device 60 forms in fact a combination of a number of parallel capacitances Cp (shown as broken lines) with equivalent resistances Rv connected in parallel thereto. The device therefore has in fact a total capacitance which can be denoted by Ct and, parallel thereto, an equivalent resistance denoted by Rvt. The magnitude of said capacitance Ct is strongly dependent on the moisture content of the material on which measurements have to be performed, while the value of the parallel resistance, which represents the equivalent resistance of the capacitor formed, may be strongly dependent on the nature of the material on which measurements have to be performed; in particular, in the case of soil humidity measurements, the value of Rp will vary considerably for equal humidity depending on the composition of the soil.

If the natural oscillation frequency of the system formed by the parallel circuit L2-C1 and the transformed capacitance/equivalent resistance of the device 60 connected parallel thereto is calculated, it emerges that, taking the requirements for maintaining oscillations as a basis, the oscillation frequency is equal to

$$\sqrt{\frac{1}{LC} - \frac{1}{4R_p^2C^2}}$$

so that the oscillation frequency is not only dependent on the capacitance of the device but is also influenced by the equivalent resistance. According to the invention, a compensation circuit, indicated by the block 11 with connections 12 and 13 in Figure 4, is therefore connected in parallel with the circuit determining the oscillation frequency. This circuit is used to obtain a compensation for the variations in the tan $\delta$ factor of the tuned circuit.

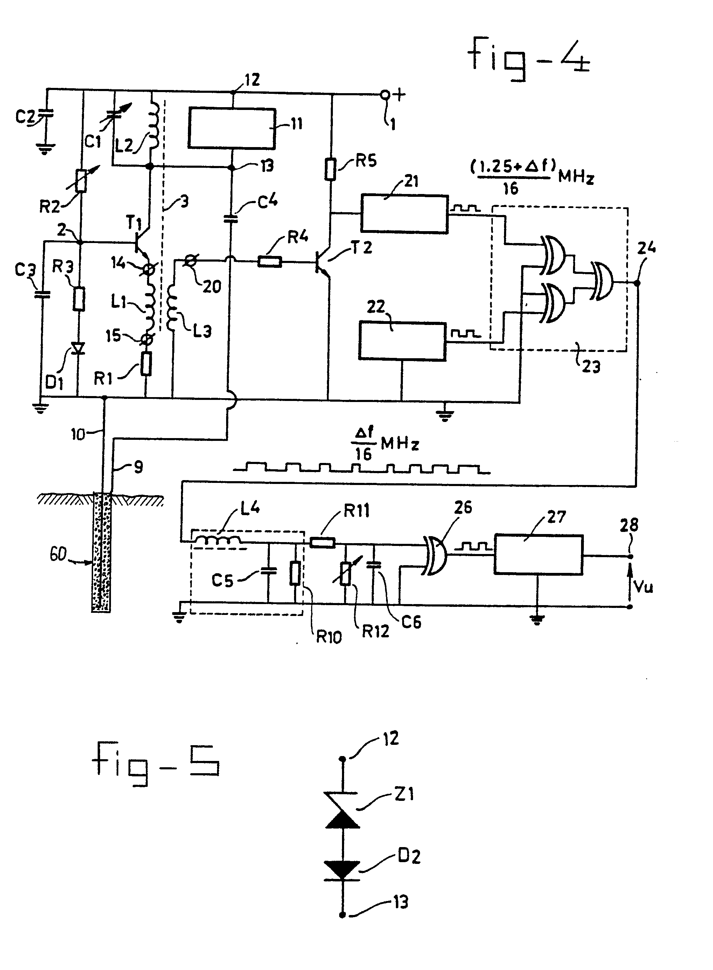

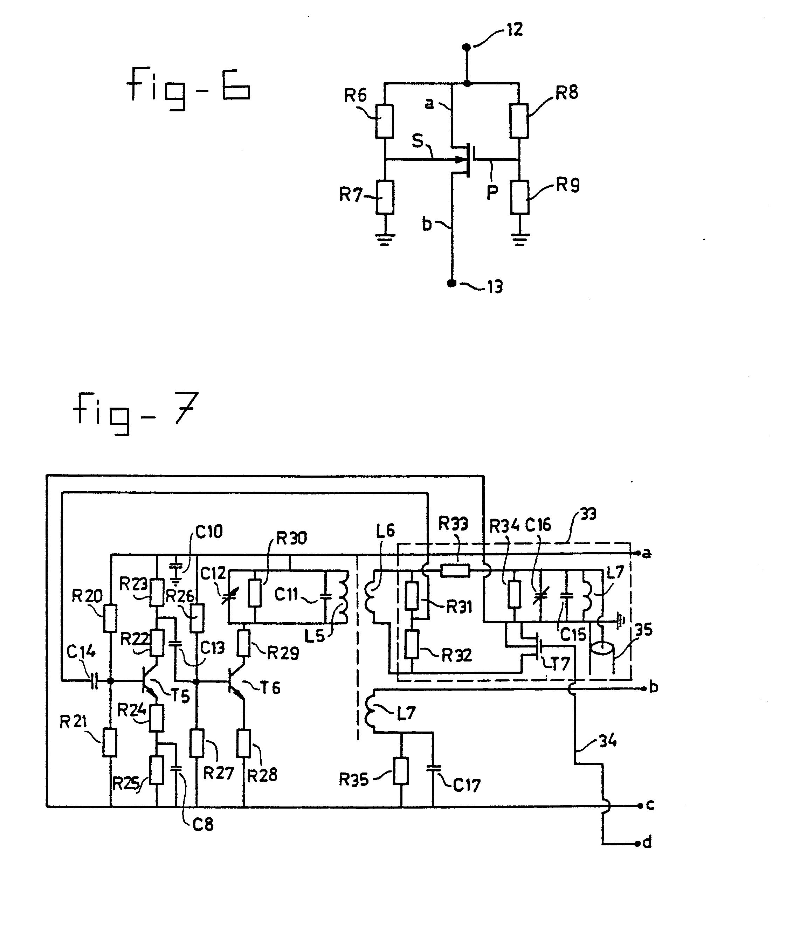

Figure 5 shows a first embodiment of said compensation circuit which in this case consists of the Zener diode Z1 and the diode D2 in series; in practice it has been found that a Zener diode of the type 5V6 and a diode of the type BAX 13 are satisfactory. Figure 6 shows an embodiment with a field-effect transistor T3 of the type BSV 81 as the main component; the substrate S is connected to the junction of a voltage divider formed by the resistors R6 and R7 inserted between the point 12 and earth, the source B is connected to the point 13, the drain A is connected to the point 12 and the gate P is connected to the junction of a voltage divider formed by the resistors R8 and R9, also inserted between the point 12 and earth. It is therefore in fact the source/drain resistance channel which in this embodiment is parallel to the circuit formed by the self-inductance L2 and the parallel capacitance of the capacitor C1 and the transformed sensor capacitance.

The operation of the oscillator is as follows:

In the steady state $\mu\beta = 1$ applies for the oscillator value.

$R_t$ denotes the total parallel resistance formed by the circuit losses and the total transformed emitter impedance $n^2 (R + r_e)$, the damping offered by the resistance channel of the MOS transistor and the load resistance of the soil moisture sensor $R_p$.

For the purpose of the calculation, we imagine the circuit to be cut open at the points 14-15 and imagine a power supply $V_e$ to be disposed between the emitter resistor R and the emitter of the oscillator. The emitter current is then, with a large approximation,

$i_e = \dfrac{Ve}{R + r_e}$  ($r_e$ is the average internal emitter resistance of the transistor and is equal to

$\dfrac{25}{i_e(DC)}\,\Omega$ with $i_e$ in mA DC).

$i_c$ is then $\dfrac{\alpha \cdot V_e}{R + r_e}$  and thus $V_c = \dfrac{\alpha \cdot V_e}{R + r_e} \cdot R_t$ ($V_c$ is the AC collector voltage).

The voltage on the secondary of the transformer is thus:

$$V_e' = \frac{\alpha \cdot V_e \; R_t}{(R + r_e)n}$$

If the oscillator is to maintain its oscillation, $V_e$ must be $\geqslant V'_e$ and in the equilibrium state (steady state) $V_e = V'_e$.

Thus: $\dfrac{\alpha \cdot V_e \cdot R_t}{(R + r_e)n} \geqslant V_e \cdot \longrightarrow \dfrac{\alpha \cdot R_t}{(R + r_e)n} \geqslant 1$

In our special case this is therefore the expression for $\mu\beta = 1$.

The oscillator is so dimensioned that at the start of the oscillation process

$$\frac{\alpha \cdot Rt}{(R + r_e)n} > 1.$$

As the oscillation signal increases from the noise, the instantaneous source voltage of the MOS transistor is so large with respect to the substrate and gate potential established, that the MOS transistor is turned on and a resistance channel is formed which appears in parallel with the tuned circuit. The average R value thereof is so chosen that it is on average for example 1,000 to 1,500 $\Omega$ at the instant when $\dfrac{\alpha \cdot Rt}{(R + r_e)n} = 1$,

while, in addition, the value of $R_t$ is then so large that the circuit quality under these conditions is still approx. 10: thus

$\dfrac{R_t}{\omega_o 1} = 10$; $\omega_o$ being $2\pi f_o$, where $f_o$ is the oscillation frequency.

In order to satisfy these requirements, $f_o$ appears to have to be > 1 MHz for reasonable dimensioning.

In our design $1 \leqslant f_o \leqslant 5$ MHz.

Under these conditions the temperature and the ground conductivity must vary less than for the system described first.

As stated earlier, the tuning capacitance is formed by a fixed part C1 and a variable part Cp and the total parallel resistance $R_t$ by a fixed part and a variable part $(R_p)$.

If the soil humidity now changes, because $\mu\beta = 1$, the increased load $R_v$ is compensated for by the decreased load of the MOS transistor resistance.

For the tuned circuit it appears as if, with a large approximation, only $C_p$ changes and as a result $f_o$ changes according to the compensated formula:

$$fo = \frac{1}{\sqrt{L_A(C_1 + C_p)}}$$

(the interference term is kept constant).

$$fo + \Delta f = \frac{1}{\sqrt{L_A(C_1 + C_v + \Delta C_v)}}$$

Thus: $$\frac{\Delta fo}{fo} = \sqrt{\frac{L_A(C_1 + C_v)}{L_A(C_1 + C_v + \Delta C_v)}} - 1$$

$$\frac{\Delta fo}{fo} = -1/2 \frac{\Delta C_v}{C_A}$$

where $C_A = C_1 + C_v$.

The oscillation frequency appearing at the point 20 is fed to the divider 21 which divides said frequency by a factor of 16. 22 denotes a reference oscillator operating at a frequency of 1.25 MHz. The output signals of the oscillators 21 and 22 respectively are fed to the inputs of an exclusive OR gate 23 at the output 24 of which a pulse train appears, the frequency of which is equal to ($\Delta f$: 16) MHz, and is thus proportional to the frequency deviation due to the change in the capacitance of the sensor 60. Via the low-pass filter 25 consisting of the self-inductance L4, the shunt capacitance C5 in parallel with the shunt resistor R10, and a voltage divider consisting of the fixed resistor R11 and the adjustable resistor R12 having the shunt capacitor C6 in parallel with it, the output voltage obtained is fed via the squaring device 26 to the frequency/voltage converter 27 and an output signal is obtained at the output 28 thereof which represents a frequency variation.

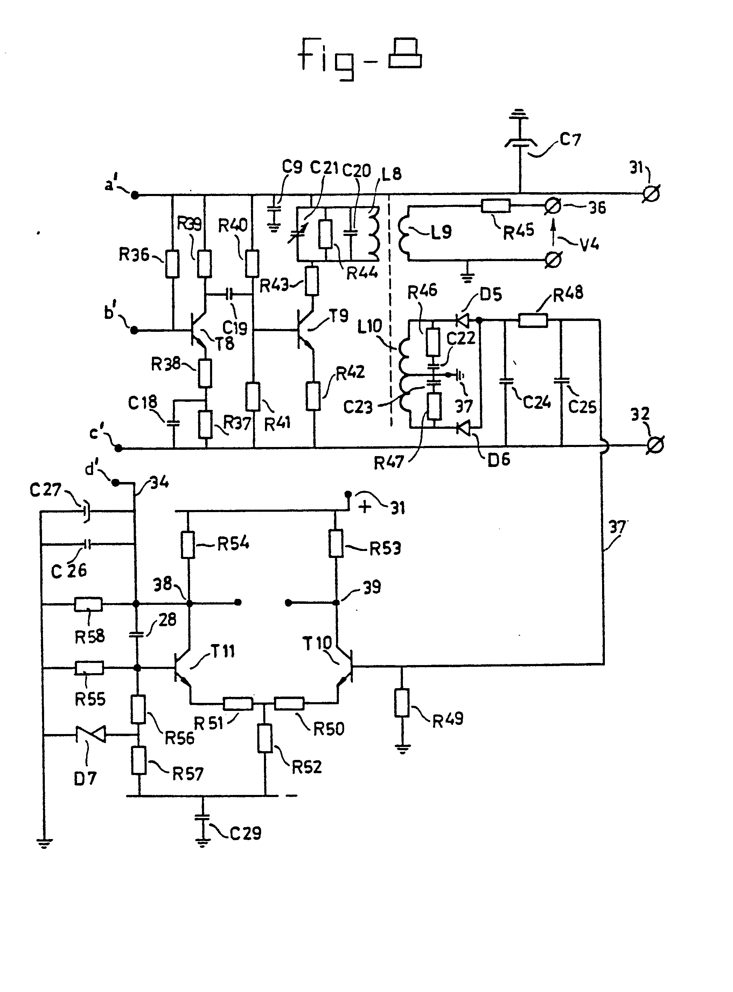

Figures 7 and 8 together show the diagram of an embodiment which in practice has yielded particularly favourable results.

The complete diagram is obtained when the points a to d incl. on the right in Figure 7 are imagined to be connected through to the points a' to d' incl. on the left in Figure 8.

In this case use is made of an oscillator of the Meacham type known per se as the oscillator; the complete circuit is built up as follows:

The oscillator circuit shown in Figures 7 and 8 is fed by a voltage source which is connected between the connecting terminals 31 and 32 and which is decoupled by the capacitor C7. The oscillator circuit used is built up around the two cascaded transistors T5 and T6; the base of T5 is adjusted by means of the voltage divider R20 and R21, while the collector circuit contains the resistors R22 and R23, and the emitter circuit contains the resistors R24 and R25, which latter is shunted by the capacitor C8; the operating point of the transistor T6 is determined by the voltage divider R26 and R27 in the base circuit, the emitter resistor R28 and the limiting resistor R29 in series with the resistor R30. This latter is inserted as a damping resistor in a very strongly damped tuned circuit consisting of the self-inductance L5, the fixed capacitor C11 and the adjustable capacitor C12. The junction of the resistors R22 and R23 is connected to the base of the transistor T6 via the capacitor C13, while an AC voltage, which is obtained as follows, is fed to the transistor T5 via the capacitor C14 to maintain the oscillation:

The winding L6 coupled to the winding L5 feeds a bridge circuit drawn inside the rectangle 33 denoted by broken lines which comprises the resistors R31 and R32 connected across the winding L6, the series resistor R33 and two other bridge branches formed, on the one hand, by a tuned circuit consisting of the self-inductance L7, the capacitor C15, the adjustable capacitor C16 and the fixed resistor R34, and on the other hand, by the source/drain channel of the field-effect transistor T7 whose gate is controlled by a DC voltage appearing on the line 34 (connection d-d'). The capacitive sensor (not drawn) corresponding to that which is used in the circuit in Figure 4, is connected in parallel with said tuned circuit via the coax cable 35. The capacitance of said sensor is involved in determining the oscillation frequency. Here

too the equivalent resistance of the capacitor formed by the sensor, and consequently the tan $d$ value of the circuit formed, influences the oscillation frequency; by suitably controlling the transistor T7, as will be explained further below, said influence is also largely neutralized in this circuit.

The oscillator frequency generated, which is also 20 MHz in this example, is taken off via the winding L7', one end of which is earthed via the parallel combination of R35 and C17 and the other end of which (connection b-b') is connected to the base of the transistor T8 having base resistor R36, collector resistor R39 and an emitter resistor made up of the series combination of R38 and R37, the resistor R37 being shunted by the capacitor C18. The coupling capacitor C19 feeds the signal appearing at the collector to the base of transistor T9, the adjustment point of which is determined by the voltage divider R40 and R41, the emitter resistor R42 and the resistor R43 inserted in the collector circuit. The collector circuit contains, moreover, a.strongly damped tuned circuit formed by the self-inductance L8 with the fixed capacitor C20, the adjustable capacitor C21 and the damping resistor R44 in parallel with it. The winding L8 is coupled to the winding L9, one end of which is earthed and the other end of which is connected via the resistor R45 to the connecting terminal 36 where a signal is taken off whose frequency varies in proportion to the humidity of the material to be measured. The connecting terminal 36 corresponds to the connecting point 20 in the embodiment in Figure 4; the output signal which appears can be processed further in the manner as shown in said figure.

Coupled to the windings L8 and L9 is the winding L10 with earthed centre tapping 37; the two halves are damped by the series combination of R46 and C22 on the one hand, and R47 and C23 on the other. The diodes D5 and D6 produce the rectification of the AC voltage appearing across this circuit; the rectified signal is smoothed by means of the resistor R48 in combination with the capacitors C24 and C25, and fed via the line 37 to the base of the transistor T10 which, along with the transistor T11, is inserted in a differential circuit. The base of the transistor T10 is earthed via the resistor R49; the emitters are earthed via the individual emitter resistors R50 and R51 and the common emitter resistor 52; the collectors are connected via the resistors R53 and R54 respectively to the positive terminal 31' of the power supply. The adjustment point of the base of transistor T11 is determined by the resistor R55 and the voltage divider R56 and R57 in combination with the Zener diode D7; the voltage appearing at the collector at the point 38 is fed via the line 34 (connection d-d') to the gate electrode of the transistor T7. The point 38 is earthed via the resistor R58 which is shunted by the capacitors C26 and C27.

The regulating voltage for the transistor T10, obtained by rectification of the AC voltage appearing across the winding L10, also influences the adjustment of the transistor T11 and consequently, the regulating voltage for the transistor T7 obtained at the point 38; this is controlled in a manner such that variations in the conductivity of the material whose moisture content is being measured with the sensor have no effect on the frequency of the oscillation voltage generated.

The regulating voltage obtained represents the conductivity of the material (the soil) on which measurements are being performed; by connecting a suitable measuring instrument to the collectors of the transistors T10 and T11 (points 38 and 39) respectively it is possible to determine said conductivity at the same time as the moisture content.

Although a preferred embodiment of the invention is described above, it must be understood that the invention is not limited thereto. In particular, instead of the cylindrical capacitor shown, any other capacitor may be used. At the same time the medium may comprise a material other than glass and the grain size (distribution) can deviate from that given here. In addition, the frequency range may be different in order to obtain optimum matching to the moisture content which is being measured.
It is also possible to use any other circuit which is
suitable for measuring capacitance instead of the circuit
shown here.

CLAIMS

1. Device for measuring the moisture tension of a substrate, comprising a capacitive sensor to be introduced into the substrate, characterized in that the dielectric of said capacitive sensor comprises a material in granular form which is different from the substrate and which has dielectric properties as a function of the moisture tension which are essentially known.

2. Device according to claim 1, characterized in that the grains are present in globular form.

3. Device according to one of the preceding claims, characterized in that the granular material comprises glass.

4. Device according to one of the preceding claims, characterized in that the average grain size of the material is less than 100 µm, in particular 60 µm.

5. Device according to one of the preceding claims, characterized in that the at least one porous electrode embodies oblong slots.

6. System for capacitively measuring the moisture tension of a substrate, characterized in that it comprises a device according to one of the claims 1 - 4, coupled to a measuring circuit for determining the capacitance comprising an LC oscillator, the sensor being connected in parallel with the parallel LC circuit which determines the oscillation frequency, and which LC circuit cooperates with a voltage-dependent element, the resistance of which is affected by the AC voltage appearing across the circuit in a manner such that a decrease in the loss resistance between the electrodes of the sensor is compensated for by an increase in the resistance of the element and vice versa, said element consisting of a Zener diode in series with a diode.

7. System for capacitively measuring the moisture tension of a substrate, characterized in that it comprises a device according to one of the claims 1 - 4, coupled to a measuring circuit for determining the capacitance comprising an LC oscillator, the sensor being connected in parallel with the parallel LC circuit which determines the oscillation frequency, and which LC circuit
cooperàtes with a voltage-dependent element, the resistance
of which is affected by the AC voltage appearing across
the circuit in a manner such that a decrease in the
loss resistance between the electrodes of the sensor is
compensated for by an increase in the resistance of the
element, said element consisting of a field-effect transistor whose source-drain resistance channel is incorporated in the tuned circuit and whose substrate and gate
respectively are connected to reference voltages.

8.     Method for using the system according to claim 5
or 6, characterized in that the measuring frequency is
between 1 MHz and 5 MHz.

**fig-1**

**fig-2**

Fig-3

fig-4

fig-5

Fig-6

Fig-7

## Fig-8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | NL-A-6 814 387  (SIEMENS) <br> * Page 3, lines 21-30 * | 1 | G 01 N   27/22 |
| Y,D | NL-C-   79 845   (BELL TELEPHONE) <br> * Claim * | 1 | |
| Y,D | NL-C-  173 099  (STICHTING TECHNISCHE EN FYSISCHE DIENST VOOR DE LANDBOUW) <br> * Claims * | 1 | |
| A,D | US-A-3 315 518  (R.J. CHARLSON) <br> * Column 2, lines 14-24 * | 1 | |

TECHNICAL FIELDS SEARCHED (Int. Cl.4)

G 01 N

The present search report has been drawn up for all claims

| Place of search | Date of completion of the search | Examiner |
|---|---|---|
| THE HAGUE | 07-04-1987 | DUCHATELLIER M.A. |